# EUROPEAN PATENT APPLICATION

(11) **EP 2 119 369 A2**
(43) Date of publication of application: **18.11.2009**
(21) Application number: 09160217.7
(22) Date of filing: 14.05.2009
(51) Int. Cl.: A23G 1/40, A23G 1/48, A23L 1/308

(54) **Fiber-fortified chocolate**

(30) Priority: 14.05.2008 US 127509 P; 24.12.2008 US 140708
(71) Applicant: Texas Peanut Butter Eggs, Inc., Houston, TX 77065-4909 (US)
(72) Inventor: Shepley, Daniel C, Houston, TX 77065-4909 (US); Aramouni, Fadi M, Houston, TX 77065-4909 (US)
(74) Representative: Clarke, Lionel Paul

(57) **Abstract**

It has unexpectedly been found that the consumer acceptance of certain chocolate products is increased by the addition of dietary fiber in the form of wheat dextrin to the formulation. In consumer acceptance trials the amount of fiber ranged from about 3 to about 9 percent by weight.

## Description

### CROSS-REFERENCE TO RELATED APPLICATIONS:

This application claims the benefit of U.S. Provisional Application No. 61/127,509 filed May 14, 2008, and U.S. Provisional Application No. 61/140,708 filed December 24, 2008.

### BACKGROUND OF THE INVENTION

### 1. Field of the Invention.

This invention relates to edible chocolate preparations. More particularly, it relates to chocolate preparations having enhanced levels of dietary fiber.

There is a growing body of evidence that suggests that diets high in total fat, saturated fat, and/or trans fat may be linked with obesity and numerous chronic diseases. Chocolate and chocolate-flavored compounds are used in many food products and contribute significant amounts of both total fat and saturated fat to such food products.

The Food Nutrition Board has recommended that men consume at least 38 grams of dietary fiber each day and women 25 grams. However, it is said that Americans only consume about half of the recommended daily amounts of fiber. Most of the fiber in the human diet comes from plant sources and has been proven to play an important role in normal bowel function. Desirable sources of soluble fiber include oats, fruits, vegetables, dried peas, and beans as well as legumes. Insoluble fiber is not digested in the intestines and increases the rapid transit of food out of the body which promotes regularity and softens stools. It has been reported that many people take fiber additives to aid in weight loss. Diets that are high in fiber have been said to improve the body's ability to rid the body of waste thus shortening the length of time that food remains in the body and possibly promoting weight loss.

Dietary fiber is the indigestible portion of plant foods that pushes food through the digestive system, absorbing water and easing defecation.

Chemically, dietary fiber consists of non-starch polysaccharides such as cellulose and many other plant components such as dextrins, inulin, lignin, waxes, chitins, pectin, beta-glucans and oligosaccharides. The term "fiber" is somewhat of a misnomer, since many types of so-called dietary fiber are not fibers at all.

Dietary fiber can be water soluble or insoluble. Soluble fiber, like all fiber, cannot be digested. But it does change as it passes through the digestive tract, being transformed (fermented) by bacteria there. Soluble fiber also absorbs water to become a gelatinous substance that passes through the body. Insoluble fiber, however, passes through the body largely unchanged. Food sources of dietary fiber are often divided according to whether they provide (predominantly) soluble or insoluble fiber. To be precise, both types of fiber are present in all plant foods, with varying degrees of each according to a plant's characteristics.

Potential advantages of consuming fiber are the production of health-promoting compounds during the fermentation of soluble fiber, and insoluble fiber's ability (via its passive water-attracting properties) to increase bulk, soften stool and shorten transit time through the intestinal tract.

One particular form of dietary fiber is wheat dextrin. Wheat dextrin is a natural soluble fiber which is marketed as a gluten-free product due its low levels of gluten - only 10 ppm of gluten is typically found in wheat dextrin. A 2-teaspoon (3.5g) serving provides 12% of the Daily Value (DV) of dietary fiber based on a 2000-calorie diet.

Certain chocolate bars claim they contain "natural plant extracts which have been proven to reduce bad cholesterol (LDL) by up to 8 percent," and "high levels of naturally occurring cocoa flavanols to help promote healthy circulation."

A number of articles have been published concerning the cardiovascular benefits of cocoa rich in flavanols and studies suggest that flavanol-rich cocoa either improved vascular function or inhibited clotting in clinical trials.

Dark chocolate is especially high in polyphenols, antioxidants that have been linked to cardiovascular benefits, and some studies have suggested that small amounts eaten daily may help lower some people's blood pressure. The Natural Medicines Comprehensive Database, an evidence-based compendium that evaluates natural products, even provides dosage information: "For isolated systolic hypertension and essential hypertension, 100 grams/day of dark chocolate rich in cocoa polyphenols has been used."

Reduced fat chocolates and reduced fat chocolate-flavored compounds are difficult to produce and do not provide the same organoleptic, appearance, and functional qualities as higher fat chocolates and higher fat chocolate-flavored compounds.

United States Patent No. 7,229,654 to Gaonkar et al. describes an edible multilayer moisture barrier for food products for separating food components having different water activities and preventing or significantly inhibiting movement of water between the food components. The edible multilayer moisture barrier includes a lipid layer and a flexible hydrophobic layer.

### BRIEF SUMMARY OF THE INVENTION

It has been found that certain chocolate formulations have increased consumer preference when dietary fiber in the form of wheat dextrin is added. The addition of fiber to chocolate produces a product having both a lower percentage of fat and a higher percentage of dietary fiber. This fiber-fortified chocolate may be used as a layer with varying substrates coated in a shell of hard chocolate.

### BRIEF DESCRIPTION OF THE SEVERAL VIEWS OF THE DRAWING(S)

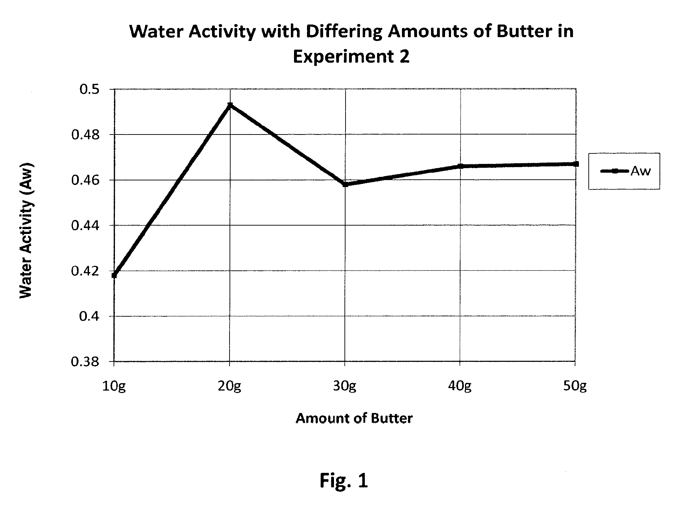

Figure 1 is a graph showing the measured water activity of chocolates having differing amounts of butter.

Figure 2 is a graph showing the measured water activity of chocolates having differing percentages of fat.

Figure 3 is a bar chart comparing water activities before and after the formulation of candies with a particular chocolate preparation.

Figure 4 is a bar chart comparing the willingness of male and female consumers to purchase a low-fat or fiber-fortified chocolate.

Figure 5 is a bar chart showing the consumer acceptability of selected fiber-fortified candies.

Figure 6 is a graph showing consumer acceptability of various fiber-fortified chocolates.

Figure 7 is a bar chart showing consumer acceptability of various milk chocolates and baking chips having differing fiber content.

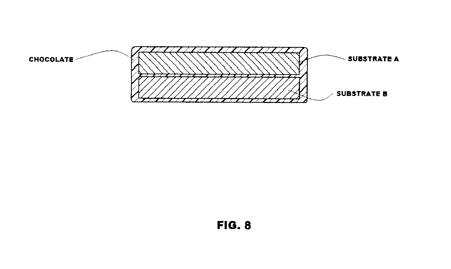

Figure 8 is a cross-sectional view of a multi-layer confection according to one embodiment of the invention.

### DETAILED DESCRIPTION OF THE INVENTION

### Glossary

The following terms and abbreviations are used in this disclosure.

Brix or Degrees Brix (°Bx) is a measurement of the dissolved sugar-to-water mass ratio of a liquid. It can be measured with a saccharimeter that measures specific gravity of a liquid or with a refractometer. A 25 °Bx solution is 25% (w/w), with 25 grams of sugar per 100 grams of solution. Or, put another way, there are 25 grams of sucrose (sugar) and 75 grams of water in the 100 grams of solution.

Cacao (or cocoa) beans come from cacao tree pods and are the basis for chocolate.

Carrageenan is an emulisifier used to thicken food products and to bind ingredients. It is frequently used as a stabilizing agent in ice cream.

Chocolate liquor results from cocoa nibs being heated and ground. Also termed bitter, unsweetened, baking, or cooking chocolate.

Cocoa butter is the natural fat found in cacao beans.

Cocoa powder results from chocolate liquor processed to remove some fat. It comprises between 10 and 22 percent cocoa butter.

Dark chocolate is a generic term for sweet, semi-sweet, or bittersweet chocolate.

DATEM is an acronym for Di-Acetyl Tartaric (acid) Ester of Monoglyceride. It is an emulsifier used primarily in baking.

DV or Daily Value is a food label requirement -- the Percent Daily Value (DV) that one serving of the food provides as a percentage of established standards. For example, a label may show that a serving of the food provides 30 percent of the daily recommended amount of fiber. Percent DV is based on a 2,000-calorie diet for adults older than 18.

Fibersym^{™} is a line of resistant starch manufactured and marketed by MGP Ingredients Inc. (MGPI). Resistant starch is defined as the product of starch and starch degradation. Like fiber, it resists digestion in the small intestine, and instead ferments in the large intestine. Fibersym^{™} 70 is a wheat-based version that contains 70% total dietary fiber, and Fibersym^{™} 80ST is potato-based and contains 80% total dietary fiber as analyzed by AOAC Method 991.43.

Lecithin is an emulsifier sometimes used in cooking. Commercial lecithin, as used by food manufacturers, is a mixture of phospholipids in oil. The lecithin is obtained by degumming the extracted oil of the seeds. The lecithin is a mixture of various phospholipids, and the composition depends on the origin of the lecithin. A major source of lecithin is soybean oil.

Litesse is a trademark for polydextrose, a low calorie, sugar free, specialty carbohydrate used as a sweetener.

Milk chocolate has more milk fat and milk solids than dark chocolate, with not less than 10 percent chocolate liquor.

Mono- and di-glycerides are emulsifiers that prevent separation and provide good consistency to foodstuffs.

PGPR is Polyglycerol Polyricinoleate, an emulsifier made from castor beans which is used to reduce the viscosity of chocolate and similar coatings and compounds.

PHGG is partially hydrolyzed guar gum, derived from the seed of the cluster bean. Fiber supplements made with PHGG dissolve completely in water and won't thicken.

Semi-sweet or bittersweet chocolate is chocolate containing more chocolate liquor than sweet chocolate, at least 35 percent chocolate liquor.

Sodium Stearoyl Lactylate is an emulsifier used in foods.

Splenda is a trademark for a sucralose-based artificial sweetener.

Sweet chocolate is chocolate made with 15 to about 35 percent chocolate liquor and sweeteners and may contain other ingredients.

Water activity (A_{w}) is a dimensionless quantity used to represent the energy status of the water in a system. It is defined as the vapor pressure of water above a sample divided by that of pure water at the same temperature; therefore, pure distilled water has a water activity of one. It is widely used in food science as a simple, straightforward measure of the dryness of food; foods typically have an optimum water activity at which they exhibit the longest shelf life. Water activity can be used to predict the direction of water movement - water will show a net diffusion from regions of high water activity to regions of low water activity.

White chocolate comprises cocoa butter mixed with dairy, sweeteners, or other ingredients, but contains no chocolate liquor.

Xanthan gum is a gum made from corn sugar. It is commonly used as a suspending agent, a stabilizer and an emulsifier in foodstuffs.

### Objects of the Invention

The U.S. Dietary Guidelines Advisory Committee recommends that the average adult consume 28 grams of fiber per 2000 calories daily. However, studies report that Americans typically consume only 4 to 6 grams daily. There is thus a need to increase the fiber content of foods that consumers prefer to eat. Likewise a need exists to reduce the quantity of fat (particularly saturated fat) in the diet of most Americans. The present invention allows a chocolate confection to be formulated that has both increased dietary fiber and lower fat content while possibly enhancing its taste.

A preliminary goal was to create a low-fat chocolate suitable for use as a substrate layer in a candy product. After many experiments to develop this chocolate, it was found to be more feasible to produce not only a low-fat chocolate, but one with a good or preferably high source of fiber. Various types of fiber were tested for functionality and texture in the chocolate. Before the addition of fiber to the chocolate, the low-fat version was developed using different sweeteners, different amounts/kinds of fats, and a variety of other variable ingredients. One of the main challenges was getting the chocolate to harden. By testing the soluble sugar content of chocolate almond bark, a range was established and closely met in the fiber-fortified chocolate. By making these values similar and crystallizing the sugar solution before the addition of dry ingredients, hardening was achieved. However, moisture loss may be required for this hardening to take place.

### Experimental Results

### Experiment 1

Objective: To determine the quantity of non-fat dry milk that best mixes with the chocolate.

| | | |
|---|---|---|
| 10% = 90g | + | 10g non-fat dry milk |
| 15% = 85g | + | 15g non-fat dry milk |
| 30% = 70g | + | 30g non-fat dry milk |

Each mixture was heated in a double boiler.

Initially, the mixtures were clumpy and unusable. Then, the procedure was reanalyzed and other options were considered such as adding the non-fat dry milk little by little.

The experiment was repeated using the revised method. First, the non-fat dry milk and water were mixed. Then, the chocolate was melted in a saucepan. After the chocolate was melted, the Non-Fat Dry Milk mixture was added.

Observations: As soon as the non-fat dry milk mix was added to the melted chocolate, the chocolate started to firm up and form a brownie-batter consistency. The shininess left the chocolate. When cooled, the 10% and 15% samples had the appearance of brownies. The 30% mixture had a little shine to it and the consistency of very thick pudding.

### Experiment 2

### Chocolate with different proportions of butter.

Objective: To find the amount of butter that works best in proportion with the chocolate.
- Mixed:: 7g Cocoa Powder
14g Splenda
14g Isolated Soy Protein
4g Soy Lecithin (an emulsifier)

60g of corn syrup were heated to boiling. After mixing the Cocoa Power, Splenda, Protein, and Emulsifier, the Cocoa Mixture was added to the pan. Then, 10g of unsalted butter were added to the previous preparation. A sample of this mix was placed in a beaker.

Then, the same procedure was used to make samples having different proportions of butter. In the end, five beakers with different proportions of unsalted butter remained; 10g, 20g, 30g, 40g, and 50g

The beakers were placed in the refrigerator to cool.

Observations: As expected, the higher the butter content, the higher the number of yellow bits of fat that appeared in the chocolate.

### Experiment 3

Objective: To evaluate the possible replacement of the soy protein by protein from dried whole eggs.
Chocolate with dried whole eggs
60g Corn Syrup
7g Cocoa
14g Splenda
14g Dried Whole Eggs (protein)
4g Soy Lecithin (an emulsifier)
11g Cocoa butter
110g Total

There should be 11g of Fat because the total fat will represent 10% of the total weight.

The Cocoa Powder, Splenda, Dried Whole Eggs (protein) and Emulsifier were mixed. The corn syrup and fat were heated and the dry mixture added to the corn syrup.

The Chocolate was placed in the refrigerator to cool.

### Experiment 4

Objective: To examine the ability to make filled candies with the formulated chocolate.
10g Cocoa Butter
65g Sugar
10g Casein (protein)
5g Corn Starch
0.5g Xanthan Gum
9.5g Cocoa (in the form of a baking square)
100g Formula Total Weight

First, the fat and chocolate were heated together in a saucepan. The dry ingredients were then added and mixed until smooth.

This chocolate was then formed into candies with marshmallow and granola substrates.

Observations: Chocolate Water Activity (A_{w} = 0.645

### Experiment 5

Objective: To find the weight of chocolate cups.

Chocolate was formulated using:
10g Cocoa Butter
97.5g Corn Syrup
5g Protein
10g Starch
0.5g Soy Lecithin (an emulsifier)
9.5g Cocoa

Seven small cups were filled with chocolate made per the above formula. Their weights were measured as follows:

| # Cup | 1 | 2 | 3 | 4 | 5 | 6 | 7 |
|---|---|---|---|---|---|---|---|
| Grams | 33.591 | 36.487 | 41.40 | 38.975 | 37.418 | 37.664 | 39.37 |

Lastly, the cups formulated were place in an incubator at 100°F.

### Experiment 6

Objective: To measure the weight of chocolate.

The seven Chocolate cups from Experiment 5 were placed in the incubator at 100°F. The weight was measured on each cup, and the measurements were retaken to measure weight lost during cooling and drying:

| # Cup | 1 | 2 | 3 | 4 | 5 | 6 | 7 | Average |
|---|---|---|---|---|---|---|---|---|
| Weight 4/30/08 | 33.591 | 36.487 | 41.40 | 38.975 | 37.418 | 37.664 | 39.37 | 37.844 |
| Weight 5/02/08 | 31.777 | 34.595 | 39.464 | 36.852 | 35.323 | 35.606 | 36.934 | 35.793 |
| Difference | 1.814 | 1.892 | 1.936 | 2.123 | 2.095 | 2.058 | 2.436 | 2.051 |
| % of Decrease | 5.4% | 5.18% | 4.68% | 5.45% | 5.6% | 5.46% | 6.19% | 5.42% |

After two days, the chocolate's color was brown but some differences in color were observed. It thus appears that the aspect of the chocolate is not homogeneous.

### Experiment 7

### Complement of information about the 10 Chocolates.

The ten chocolate samples were those made in the above-described experiments. For each one, water activity, pH, Brix, and percent fat were measured with the following results:

| Sample Number | Water Activity | pH | % Brix | % Fat in final choc. |
|---|---|---|---|---|
| 1 | .636 | 5.75 | 81.4 | 25% |
| 2 | .658 | 5.62 | 77.0 | 21% |
| 3 | .652 | 5.24 | 76.9 | 16% |
| 4 | .663 | 5.33 | 75.3 | 12% |
| 5 | .66 | 4.70 | 86.6 | 8% |
| 6 | .729 | 4.88 | 81.6 | 7% |
| 7 | .743 | 5.12 | 79.5 | 7% |
| 8 | .736 | 4.48 | 83.6 | 7% |
| 9 | .703 | 4.85 | 83.3 | 7% |
| 10 | .693 | 4.88 | 80.8 | 8% |

### Experiment 8

Formulas 1, 2, 3 and 4 were made using sugar (sucrose) as the sweetener.
Formula 1
   30g Vegetable Fat
   60g Sugar
   15g Soy Protein
   10g Corn Starch
   0.5g Mono and diglyceride
   4.5g Cocoa Powder
Formula 2
   25g Vegetable Fat
   60g Sugar
   15g Soy Protein
   10g Corn Starch
   0.5g Mono and diglyceride
   9.5g Cocoa Powder
Formula 3
   20g Vegetable Fat
   75g Sugar
   10g Soy Protein
   10g Corn Starch
   0.5g Mono and diglyceride
   9.5g Cocoa Powder
Formula 4
   15g Vegetable Fat
   82.5g Sugar
   10g Soy Protein
   10g Corn Starch
   0.5g Mono and diglyceride
   9.5g Cocoa Powder

Then, formulas 1 and 2 were made again using corn syrup instead of sugar (sucrose) as the sweetener.

Observations: The most functional trial appears to be #1 formulated with sugar. It hardened and set at room temperature.

### Experiment 9

Objective: Testing new chocolate recipes for functionality.
7.5g Butter
70g Syrup
5g Egg
10g Starch
0.5g Xanthan Gum
9.5g Cocoa
0.25g Flavor

### Experiment 10

7.5g Butter
68g Syrup
5g Egg Protein
10g Food Starch
0.5g Xanthan Gum
9.5g Cocoa Powder
2g Cocoa Powder

Brix %: 79.1

### Experiment 11

Objective: To produce a smooth, functional chocolate.
Mix and heat:
   58g Corn Syrup
   27.65g Water
   2g Fat (Crisco)
Then, add dry ingredients:
   0.35g Salt
   0.4g Carrageenan
   4g Cocoa Powder
   0.5g Emulsifier
   7.1 g non-fat dry milk

Add to a different batch using the same base formula, 2.5g Litesse Ultra.

Add to a different batch using the same base formula, 2.5g Litesse II.

The chocolate was heated and whisked until the mixture was homogeneous.

Observations: The smoothest batch appeared to be that of Trial 3, described below. The chocolate started to thicken immediately when it was removed from the heat and had a pudding-like consistency at room temperature. The Chocolate is very thick and sticky, like pudding.

| | | | |
|---|---|---|---|
| A_{w} of chocolates: | #1: 0.812 | #2: 0.863 | #3: 0.839 |

### Experiment 12

Trial 1
   20g Water
   60g Corn Syrup
   2g Fat
   5g Cocoa
   6.45g non-fat dry milk
   5g Litesse
   0.5g Datem
   0.3g PGPR
   0.4g Gum
   0.35g Salt
Trial 2
   18g Water
   58g Corn Syrup
   6g Fat
   5g Cocoa
   6.45g non-fat dry milk
   5g Litesse
   0.5g Datem
   0.3g PGPR
   0.4g Gum
   0.35g Salt
Trial 3
   16g Water
   56g Corn Syrup
   10g Fat
   5g Cocoa
   6.45g non-fat dry milk
   5g Litesse
   0.5g Datem
   0.3g PGPR
   0.4g Gum
   0.35g Salt

These trials were made by mixing and heating the moist ingredients. Then, the dry ingredients were mixed together and added to the heated mixture.

Observations: These chocolates look promising, but are still very sticky and would not be appropriate for a chocolate bar type of product. Very High Water Activities.
- A_{w} =: Trial 1: .848 @ 24.7 C
Trial 2: .723 @ 24.7 C
Trial 3: .814 @ 25 C

### Experiment 13

Trial 4
   20g Water
   60g Corn Syrup
   2g Fat
   5g Unsweetened Chocolate Squares
   6.45g non-fat dry milk
   5g Litesse
   0.5g Datem
   0.3g PGPR
   0.4g Xanthan gum
   0.35g Salt
Trial 5
   18g Water
   58g Corn Syrup
   6g Fat
   5g Unsweetened Chocolate Squares
   6.45g non-fat dry milk
   5g Litesse
   0.5g Datem
   0.3g PGPR
   0.4g Gum
   0.35g Salt

Each trial was made by mixing the wet ingredients and heating until homogenous. The dry ingredients were then mixed together and added to the heated wet mixture.

Observations: These formulas seemed to be less sticky and thick.
- A_{w} =: Trial 4: .791 @ 26.9 C
Trial 5: .789 @ 26.6 C

### Experiment 14

65g Corn Syrup
10g Liquid Sweetener
2g Fat
6g Cocoa Square
6g non-fat dry milk
5g Litesse
.3g PGPR
.4g Gum
.35g Salt
.5g DATEM
5g Soy Protein

The chocolate was tempered -- heated to 120°F, cooled to 85°F, then reheated to 91°F.

Observations: The chocolate seemed very syrupy, so soy protein and Litesse were added to thicken. Seemed to solidify quickly, but did not harden; was still gooey.
A_{w} = 0.754

### Experiment 15

5g Water
5g Cocoa Butter
80g Corn Syrup
10g Soy Protein
5g Corn Starch
1g Emulsifier Blend
10g Chocolate (Bakers Squares)
5g Splenda
.5g Chocolate Flavor
2g Vanilla Flavor

Wet ingredients were mixed and heated. Dry ingredients were then added and mixed. The batch was heated to 160°F.

Observations: Seems Promising, the chocolate was not too sticky and held its form very well. A_{w} = 0.757

Another batch was made using the above formula with the addition of:
2g Sucralose Calorie Free Sweetener
5g Water
3g Splenda (containing maltodextrin as bulking agent)

The batch was then tempered (heated to 120°F, cooled to 85°F, and then reheated to 91°F)

Ovservations: This batch tasted good, but was sticky and greasy.
A_{w} = 0.792

### Experiment 16

### Chocolate Hard Candy

Trial 1:
   3 ¾ cup Sugar
   1 ¼ cup Light Corn Syrup
   1 cup Water
   Ideal Temperature: 290°F
   Temperature reached: 225°F

Would not reach higher temperatures on the hot plate.

Added 2 tbsp Cocoa powder to syrup mixture. Did not solidify.
Trial 2:
   1 cup Sugar
   1/3 cup Corn Syrup
   ½ cup Water
   Ideal Temperature: 300°F
   Temperature reached: 225°F
Hot plate unable to reach ideal temperatures.

Observations: It did not harden. Next Day; Still syrupy did not harden.

### Experiment 17

10g Water
5g Cocoa Butter
40g Corn Syrup
10g Soy Protein
5g Corn Starch
2g Emulsifier Blend (mono- and di-glycerides)
10g Chocolate Squares (Bakers)
40g Splenda/Sugar Blend
.5g Chocolate Flavor
2g Vanilla Flavoring

The wet ingredients were mixed and heated. When homogenous, the dry ingredients were added, mixed, and then heated to 185°F in a double boiler. Unable to achieve a higher temperature with the double boiler.

Observations: A_{w} = 0.642

### Experiment 18

### ("Chocolate 1 ")

10g Water
5g Cocoa Butter
55g Corn Syrup
25g Splenda/Sugar Blend
10g Soy Protein
7g Corn Starch
2g Emulsifier Blend (mono- and di-glycerides)
10g Chocolate Bakers Squares
.5g Chocolate Flavor
2g Vanilla Flavor
5g Litesse II

All the wet ingredients were mixed and heated. Half the dry ingredients were then added, and the remaining half of the dry ingredients were added at 150°F.

Observations: Not gritty like most chocolates with sugar. Holds form easily, but is also pliable. A_{w} = 0.713

### Experiment 19

Objective: crystallize the sugar in the chocolate
10g Water
5g Cocoa butter
20g Corn Syrup
90g Sugar
10g Soy Protein
7g Starch
2g Emulsifier Blend
10g Chocolate Baking Squares
0.5g Chocolate Flavor
2g Vanilla
5g Litesse II

All ingredients were heated together to 260-265°F. Mixture would not reach a higher temperature without burning.

Observations: The sugar did not crystallize. Very sticky to the touch, like thick syrup. A_{w} = : 0.541

### Experiment 20

Objective: To use convection oven and attempt to harden the chocolates.

The samples were taken from Experiment 18. The samples were placed in the convection oven at 170°F for one hour to observe moisture loss.

| | Sample 1 | Sample 2 | Sample 3 |
|---|---|---|---|
| Before Convection | 20.2g | 21.23g | 18.75 |
| After Convection | 19.85g | 20.73g | 18.32 |
| Loss | 2% | 3% | 3% |

Observations: The chocolates did not harden much during the time in the heat. Stayed very similar.

### Experiment 21

Objective: Resort back to basics to find a quality chocolate.
25g Sugar
10g Corn Syrup
7g Cocoa Butter
7g PGPR
15g non-fat dry milk
0.6g Chocolate Flavor
2g Vanilla
10g Cocoa Powder
3g Emulsifier Blend
10g Water

Heated all the wet ingredients, and mixed in dry. Heated and stirred to 175°F. Tastes like hot chocolate. Very sticky, does not hold shape.
A_{w} = 0.794

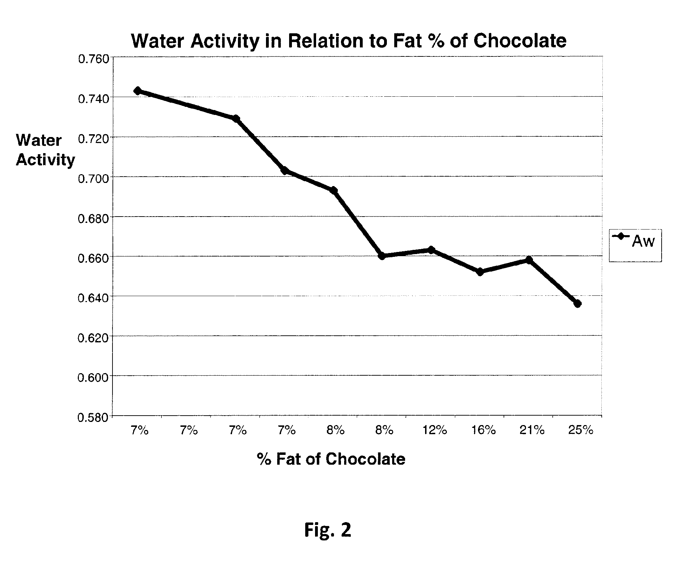

Figure 2 shows the water activity versus the percentage of fat in the chocolate.

### Experiment 22

10g Water
6g Cocoa Butter
55g Corn Syrup
25g Sugar
10g Soy Protein
5g Corn Starch
2g Emulsifier Blend
10g Bakers Squares Chocolate
0.5g Chocolate Flavor
2g Vanilla Flavor
5g Litesse II
5g non-fat dry milk
5g PGPR

The wet ingredients were heated, and half of the dry ingredients were added. The next half were added at 150°F. The mixture was poured into a mold with layers of peanuts, cranberries, and coconut substrates.

**Water Activity of Chocolates**

| Plain Chocolate | Chocolate with Peanuts | Chocolate with Coconut | Chocolate with Cranberries |
|---|---|---|---|
| 0.760 | 0.776 | 0.808 | 0.809 |

Water activity of substrate layers prior to being in the chocolate:
Cranberries: .524
Coconut: .843
Graham cracker: .366

### Experiment 23

The Formulas; (Chocolate 1) was used in this experiment, as well as a white almond bark coating.

### Chocolate 1:

10g Water
5g Cocoa Butter
55g Corn Syrup
25g Splenda/Sugar Blend
10g Soy Protein
7g Corn Starch
2g Emulsifier Blend
10g Chocolate Bakers Squares
0.5g Chocolate Flavor
2g Vanilla Flavor
5g Litesse II

First, white almond bark was melted in a double boiler. The forms were coated with white almond bark and placed in the freezer to harden. After the white almond bark hardened, the first layer (dried cranberries) was placed on top of the white chocolate. The low fat chocolate mixture was added over the cranberries. A layer of shredded Coconut was then placed on top of the low fat chocolate layer. Almond bark was then coated over the top and the chocolates were placed in the refrigerator to cool and harden.

All wet ingredients were mixed and heated; then, half the dry ingredients were added. The last half of the dry ingredients were added at 150°F.

Observations: Not gritty like most chocolates with sugar. Holds form easily, but is pliable also.
Water Activity before making candy
A_{w} = .713

A_{w} of all components after being in chocolate candies for 2 days:
Cranberries: 0.616
Coconut: 0.839
Chocolate 1: 0.718

### Experiment 24

### Layers- 2

The Formulas; (Chocolate 1) was used in this experiment, as well as a white almond bark coating.

### Chocolate 1:

10g Water
5g Cocoa Butter
55g Corn Syrup
25g Splenda/Sugar Blend
10g Soy Protein
7g Corn Starch
2g Emulsifier Blend
10g Chocolate Bakers Squares
0.5g Chocolate Flavor
2g Vanilla Flavor
5g Litesse II

All of the wet ingredients were mixed and heated; then, half the dry ingredients were added The last half of the dry ingredients were added at 150°F.

Observations: Not gritty like most chocolates with sugar. Holds form easily, but is pliable also. A_{w} = .713

First, white almond bark was melted in a double boiler. The forms were coated with white almond bark and placed in the freezer to harden. After the white almond bark hardened, the first layer (puffed marshmallow) was placed on top of the white chocolate. The low fat chocolate mixture was added over the marshmallow. A layer of graham cracker was then placed on top of the low-fat chocolate layer. Almond bark was then coated over the top and the chocolates were placed in the refrigerator to cool and harden.

**A_{w} of all components after candies were made and sat for 2 days**

| Filling | Graham Cracker | Chocolate 2 | Marshmallow |
|---|---|---|---|
| Water Activity (A_{w}) | 0.450 | 0.656 | 0.626 |

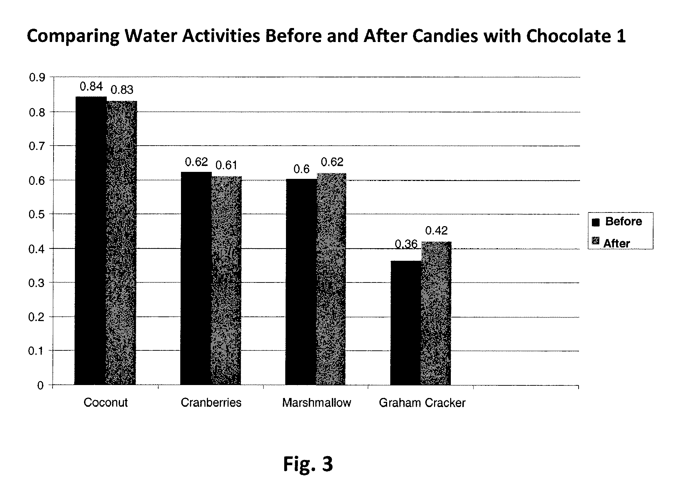

Figure 3 presents a comparison of Water Activities of the components before and after formulation as candies using Chocolate 1.

### Experiment 25

Objective: Make candies with almond bark coatings and fiber chocolate coatings with filling between.

Chocolate 2 was used in this experiment, as well as a white almond bark coating.

### Chocolate 2:

25g Sugar
10g Corn Syrup
7g Cocoa Butter
7g PGPR
15g non-fat dry milk
.6g Chocolate Flavor
2g Vanilla
10g Cocoa Powder
3g Emulsifier Blend
10g Water

Heated all the wet ingredients, and then mixed in dry. Heated and stirred to 175°F.

Observations: Tastes like hot chocolate. Very sticky, does not hold shape. However, after five days it seemed to be solid enough and appeared to be quite functional.
A_{w} = 0.794

First, white almond bark was melted in a double boiler. The forms were coated with white almond bark and placed in the freezer to harden. After the white almond bark hardened, the first layer (puffed marshmallow) was placed on top of the white chocolate. The Chocolate 2 mixture was added over the marshmallow. A layer of graham cracker was then placed on top of the chocolate 2 layer. Almond bark was then coated over the top and the chocolates were placed in the refrigerator to cool and harden.

**Water activity (A_{w}) of all components after candies are made and allowed to sit for 2 days**

| Filling | Graham Cracker | Chocolate 2 | Marshmallow |
|---|---|---|---|
| Water Activity (A_{w}) | 0.433 | 0.591 | 0.626 |

### Experiment 26

Objective: To make a two-layered candy using Chocolate Formula 2.

Chocolate formula 2 was used in this experiment, as well as a white almond bark coating.
25g Sugar
10g Corn Syrup
7g Cocoa Butter
7g PGPR
15g non-fat dry milk
0.6g Chocolate Flavor
2g Vanilla extract
10g Cocoa Powder
3g Emulsifier Blend
10g Water

All of the wet ingredients were heated, and then the dry ingredients were mixed in. Heated and stirred to 175°F.

Observations: Tastes like hot chocolate. Very sticky, does not hold shape. However, after five days it seemed to be solid enough and appeared to be quite functional.
A_{w} = 0.794

First, white almond bark was melted in a double boiler. The forms were coated with white almond bark and placed in the freezer to harden. After the white almond bark hardened, the first layer (dried cranberries) was placed on top of the white chocolate. The chocolate 2 mixture was added over the cranberries. A layer of graham cracker was then placed on top of the chocolate 2 layer. Almond bark was then coated over the top and the chocolates were placed in the refrigerator to cool and harden.

**A_{w} of all components after candies are made and allowed to sit for 2 days**

| Filling | Graham Cracker | Chocolate 2 | Dried Cranberries |
|---|---|---|---|
| Water Activity (A_{w}) | 0.420 | 0.611 | 0.430 |

### Experiment 27

The Formulas: Chocolate 1 was used in this experiment, as well as a white almond bark coating.

### Chocolate 1:

10g Water
5g Cocoa Butter
55g Corn Syrup
25g Splenda/Sugar Blend
10g Soy Protein
7g Corn Starch
2g Emulsifier Blend
10g Chocolate Bakers Squares
.5g Chocolate Flavor
2g Vanilla Flavor
5g Litesse II

Mixed and tempered all wet ingredients then added the dry ingredients.

Observations: Not gritty like most chocolates with sugar. Holds form easily, but is pliable also.
A_{w} = 0.713

The plan for this experiment was to form discs of chocolate to enable easy, uniform assembly of the chocolate layers for candies. By making the discs, the idea was to use layers of substrate and low-fat chocolate to make the finished chocolate product.

First, discs were formed with the low fat chocolate, allowed to solidify and then dipped in almond bark. When the discs were dipped in the almond bark, they melted into the warm coating.

Conclusion: The low-fat chocolate cannot be dipped in the almond bark or it will melt. The almond bark must be allowed to harden and then be layered with the low fat chocolate.

### Experiment 28

### Chocolate 1:

10g Water
5g Cocoa Butter
55g Corn Syrup
25g Splenda/Sugar Blend
10g Soy Protein
7g Corn Starch
2g Emulsifier Blend
10g Chocolate Bakers Squares
.5g Chocolate Flavor
2g Vanilla Flavor
5g Litesse II

Added 5g of Litesse to the formula and tempered the liquid ingredients. Then the dry ingredients were added. Discs were then formed using the chocolate and allowed to solidify. After the discs had solidified, layers of substrates were added. The piece was then coated in almond bark.
A_{w} of chocolate: 0.677

### Experiment 29

7g Cocoa Powder
14g Milk
29g Cocoa Butter
40g Sugar
10g Fiber

Observations: The fiber did not dissolve, became very gritty.

### Experiment 30

7g Cocoa Powder
14g NON FAT DRY MILK
29g Cocoa Butter
40g Sugar
10g Fiber

Observations: Gritty from non-fat dry milk, not all of it dissolved. Chocolate appears very greasy.

### Experiment 31

10g Cocoa Powder
15g Milk
25g Cocoa Butter
30g Sugar
10g Corn Syrup
10g Fiber

Dissolved the fiber in milk first and then add to mixture.

Observations: Nice texture, smooth.
A_{w} = 0.678

### Experiment 32

10g Cocoa Powder
15g Milk
30g Cocoa Butter
35g Sugar
15g Corn Syrup
15g Fiber

Dissolve fiber in milk first, then added to mix of Cocoa butter and corn syrup. Next added the sugar and Cocoa powder.

Observations: Fiber milk started to absorb the fat, and then added sugar/Cocoa powder. Seems to be very greasy. Too much fat? Fat separates out when cooled.
A_{w} = 0.698

### Experiment 33

10g Cocoa Powder
15g Milk
20g Cocoa Butter
35g Sugar
15g Corn Syrup
15g Fiber
3g No Calorie Sweetener

Dissolve fiber in milk first, then added to mix of Cocoa butter and corn syrup. Next add the sugar and Cocoa powder.

Observations: Not as greasy as other Experiment;, needs more flavor to mask fibrous taste.
A_{w} = 0.757

### Experiment 34

10g Cocoa Powder
20g Milk
25g Cocoa Butter
35g Sugar
10g Corn Syrup
20g Fiber (BENEFIBER brand wheat dextrin)
3g No Calorie Sweetener

The fiber was first dissolved in milk then added to mix of Cocoa butter and corn syrup. Next the sugar and Cocoa powder were added.

Observations: Very smooth texture, seems a bit greasy.
A_{w} = 0.806

### Experiment 35

25g Water
5g Cocoa Butter
55g Corn Syrup
25g Sugar
10g Soy Protein
7g Corn Starch
2g Emulsifier Blend
10g Chocolate Baking Square
2g Vanilla
5g Litese II
20g Fiber
Total 166.5g
3% Fat
12%Fiber

All wet ingredients were mixed and then heated to 175°F; dry ingredients were added by the spoonful.

Observations: Did not harden. A_{w} = 0.818

### Experiment 36

40g Water
10g PGPR
5g non-fat dry milk
5g Cocoa Butter
55g Corn Syrup
25g Sugar
10g Soy Protein
7g Corn Starch
2g Emulsifier Blend
10g Chocolate Baking Square
2g Vanilla
5g Litese II
20g Benefiber

Mixed all wet ingredients, heat to 175°F and add dry ingredients by the spoonful.

Observations: Became very sticky.
A_{w} = 0.832

### Experiment 37

15g Cocoa Powder
20g Milk
25g Cocoa Butter
30g Sugar
10g Corn Syrup
20g Fiber (fibersym)

Combine milk and fiber together to dissolve fiber. Then add to mixture before the Cocoa powder.

Observations: A_{w} = 0.772
120g total/ 20g Fiber = 16.6% Fiber

### Experiment 38

### Regular Fat/ High Fiber

Trial 1
   25g Cocoa Butter
   15g Cocoa Powder
   30g Sugar
   10g Corn Syrup
   20g Benefiber (wheat dextrin)
   20g Milk
   20.8% Fat
   16.6% Fiber
Trial 2

Exchange 20g Benefiber (Wheat Dextrin) with 20g PHGG
Observations: Not promising; gritty; fat separated.
Trial 3

Exchange 20g Benefiber (Wheat Dextrin) with 20g Fibersym

Observations: Very Smooth, but undesirable taste.

All ingredients heated and mixed.

Observations: Very smooth texture, but undesirable taste.

### Experiment 39

Low Fat/ High Fiber Chocolate
Trial 1
   25g Water
   10g Cocoa Butter
   55g Corn Syrup
   25g Sugar
   10g Soy Protein
   7g Corn Starch
   2g Emulsifier Blend
   10g Cocoa Powder
   1g Chocolate Flavor
   2g Vanilla
   5g Litesse II
   25g Benefiber (wheat dextrin)
   177g total
   14% Fiber
   5% Fat

Add all wet ingredients in double boiler (water, Cocoa butter, corn syrup) and heat. Once melted together, add premixed dry ingredients (everything except vanilla and chocolate flavor) by the spoonful, stirring constantly. Remove from heat and add flavorigs.

Trial 2 - Same formula, except with 31 g PHGG Fiber
16.9% Fiber
Trial 3 - Same formula, except with 31 g Fibersym

Fibersym consists of a wheat-based resistant starch and a new potato-based variety. Resistant starch is defined as the product of starch and starch degradation. Like fiber, it resists digestion in the small intestine, and instead ferments in the large intestine. Fibersym is said to perform like traditional fiber with additional benefits in a wide range of food products, including breads, tortillas, muffins, waffles, breakfast cereals, cookies, nutritional bars, snack products and more.
16.9% Fiber

### Experiment 40

Low Fat/ Good Source Fiber Chocolate
Trial 1
   15g Water
   10g Cocoa Butter
   55g Corn Syrup
   25g Sugar
   10g Soy Protein
   7g Corn Starch
   2g Emulsifier Blend
   10g Cocoa Powder
   1 g Chocolate Flavor
   2g Vanilla
   5g Litesse II
   15g Benefiber (Wheat dextrin)

Observations: Very Smooth.
Trial 2
   15g PHGG fiber

Observations: Fiber did not dissolve in water. Very gritty. PHGG Fiber-not the most ideal.
Trial 3
   15g Fibersym

Observations: Very smooth texture. Bad aftertaste.

### Experiment 41

Regular Fat/ Good Source Fiber Chocolate
Trial 1
   25g Cocoa Butter
   15g Cocoa Powder
   30g Sugar
   10g Corn Syrup
   9g Benefiber (Wheat Dextrin)
   9g Milk
Trial 2

Exchange 9g Benefiber (Wheat Dextrin) with PHGG

Observations: Gritty texture.
Trial 3

Exchange 9g Benefiber (Wheat Dextrin) with Fibersym

Observations: Very Smooth

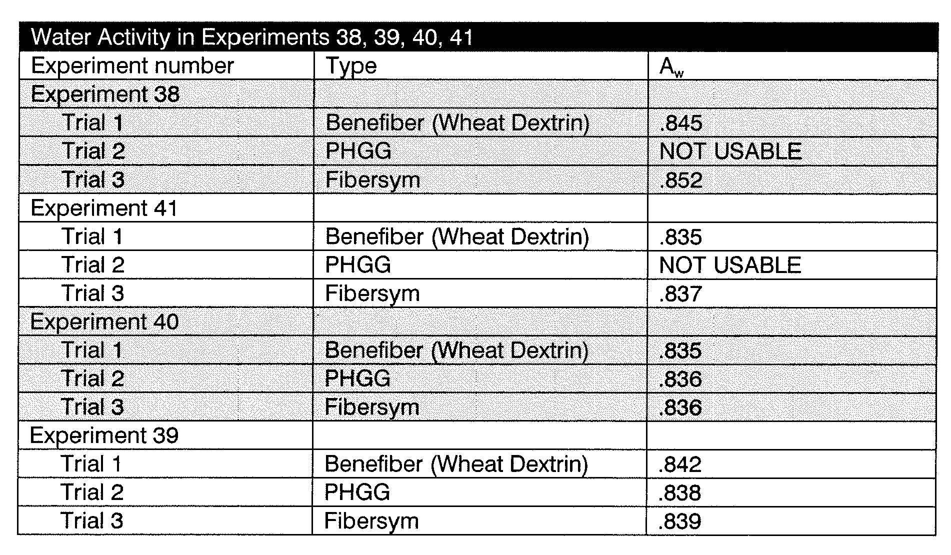

Original water activity of Peach Jam -- .904

### Experiment 42

Low Fat Chocolate/ High Fiber Chocolate

Objective: To find the fiber supplement that works best in formulas.
Trial 1
   6g Cocoa Butter
   20g Cocoa Powder
   20g Sugar
   20g Benefiber (Wheat Dextrin)
   20g Milk
   30g Corn Syrup
   A_{w} = 0.778 at 22.9°C

Observations: Very Smooth, good taste. Didn't harden.
Trial 2
   6g Cocoa Butter
   15g Cocoa Powder
   20g Sugar
   20g Benefiber (Wheat Dextrin)
   20g Milk
   35g Corn Syrup
   5g Corn Starch
   A_{w} = 0.801 at 22.9°C

Observations: Very smooth, more firm that Trial 1
Trial 3
   6g Cocoa Butter
   15g Cocoa Powder
   20g Sugar
   25g Benefiber (Wheat Dextrin)
   25g Milk
   45g Corn Syrup

Mix together milk, fiber, and cocoa powder before adding to corn syrup/sugar mixture in pan.

Observations: Not usable; too much corn syrup; liquid
Trial 4

Various gums tested to determine which might help chocolate to harden.
Mix ¼ tsp of hardener with 50mL water
Calcium Caseinate--Did not mix well. Not usable
Calcium Chloride--Mixed very well

20g Sugar
30g Light Corn Syrup
6g Cocoa Butter
20g Skim Milk
.5g Chocolate Flavor
1g Imitation Vanilla
12g Cocoa Powder
.5g Calcium Chloride
.25g Emulsifier
10g Wheat Fiber
A_{w} =0.780 at 23°C

Observations: Smooth, tastes good. Started out thin, but quickly thickened
Trial 5
   20g Sugar
   30g Light Corn Syrup
   6g Cocoa Butter
   20g Skim Milk
   .5g Chocolate Flavor
   1g Imitation Vanilla
   12g Cocoa Powder
   .5g Calcium Chloride
   .25g Emulsifier
   10g Fibersym
   A_{w} =.863 at 23°C

Observations: Smooth, but not as smooth as Trial 4; Thickened up much later than Trial 1 and 2.

| Water Activity for Experiment 42 Chocolate Trials (without filling) | |
|---|---|
| Trial | A_{w} |
| 1 | 0.778 |
| 2 | 0.801 |
| 4 | 0.780 |
| 5 | 0.863 |

### Experiment 43

Low Fat Chocolate/ High Fiber Chocolate

Objective: To use gums to thicken and solidify the chocolate.
Trial 1
   20g White Granulated Sugar
   30g Light Corn Syrup
   6g Cocoa Butter
   20g Skim Milk
   .5g Chocolate Flavor
   1g Imitation Vanilla
   12g Cocoa Butter
   1g Xanthan Gum
   .25g Emulsifier
   15g Wheat Fiber

The Cocoa Butter was melted in a pan. Light Corn Syrup was then added. In a dry bowl, the Xanthan Gum, Wheat Fiber, and Cocoa Powder were added together and then added little by little to milk. The Sugar was added to the Corn Syrup and Cocoa Butter and mixed together well allowing the sugar to dissolve. The pan was removed from the heat and the Vanilla and Chocolate Flavor were added .

Observations: Very gummy and string-like. May have too much gum.
A_{w} =0.764
Trial 2

Basic Trial 1 recipe, but with less gum and non-fat dry milk
20g White Granulated Sugar
30g Light Corn Syrup
6g Cocoa Butter
20g Skim Milk
.5g Chocolate Flavor
1g Imitation Vanilla
12g Cocoa Butter
.5g Xanthan Gum
1 g Non-Fat Dry Milk
15g Wheat Fiber

The Cocoa Butter was melted. After it was melted, the Corn Syrup was added and slowly mixed. Then, the Cocoa Powder was slowly added. The Skim Milk and Wheat Dextrin were mixed together and the mixture addedto the pan. Then the sugar was added and the heat brought up. Lastly, the Xanthan Gum and dry milk were added.

Observations: Went sticky after adding the Xanthan Gum.
A_{w} =0.742
Trial 3

No Xanthan Gum/Dry Milk
6g Cocoa Butter
30g Light Corn Syrup
12g Cocoa Powder
20g Skim Milk
15g Wheat Dextrin
2.5g Non-Fat Dry Milk
20g Sugar
1g Imitation Vanilla

The Cocoa Butter was first melted. Corn Syrup and Cocoa Powder were then added. On the side, non-fat dry milk, skim milk, and wheat dextrin were mixed together and added to the pan. The sugar was added and the mixture was stirred vigorously while the heat was brought up. The pan was taken off the heat and the Imitation Vanilla was added.

Observations: Not as sticky as trial 1 and 2, but still a bit sticky.
Trial 4
   6g Cocoa Butter
   35g Light Corn Syrup
   15g Cocoa Powder
   20g Skim Milk
   20g Wheat Dextrin
   2g Non-Fat Dry Milk
   20g Sugar
   5g Corn Starch

The Cocoa Butter was first melted. Corn Syrup and Cocoa Powder were then added. On the side, the Non-Fat Dry Milk Powder, Corn Starch and Wheat Dextrin were mixed together with Skim Milk. The mixture was added to the pan, and after mixing together, the sugar was added and the heat brought up.

Observations: Good Texture, not as sticky
Trial 5

Similar to Trial 4, but using an egg substitute in place of dry milk
6g Cocoa Butter
35g Light Corn Syrup
15g Cocoa Powder
20g Skim Milk
20g Wheat Dextrin
2g Egg Substitute
20g Sugar
5g Corn Starch

The Cocoa Butter was first melted. The Light Corn Syrup and Cocoa Powder were then added. On the side, the Egg Substitute, Corn Starch and Wheat Dextrin were mixed together with Skim Milk. The mixture was added to the pan, and after mixing together, the sugar was added and the heat brought up.

Observations: Looks promising.

### Experiment 43: Attempt to thicken fiber chocolate

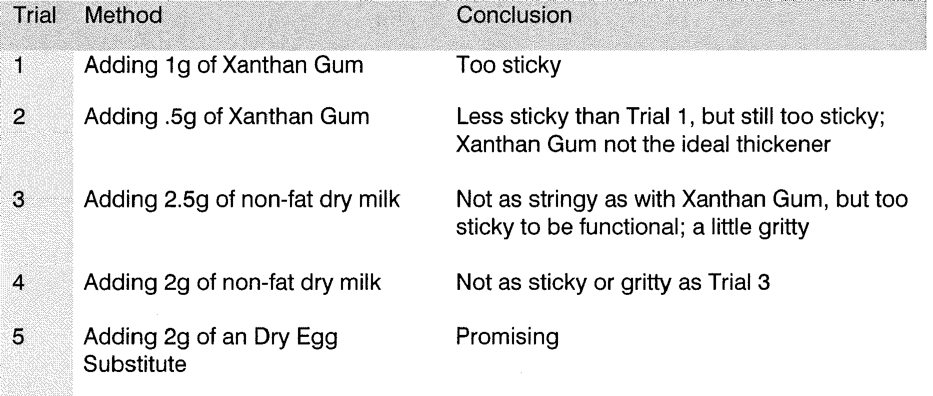

### Experiment 44

Using Chocolate Almond Bark and Fiber

Objective: To find the highest capacity of fiber that Chocolate Almond Bark can hold.

Method: Adding Wheat Dextrin to Chocolate Almond Bark to see if the Chocolate still hardens.
Trial 1-With Water
8-10% Fiber content
   Solid at Room Temperature
25% Fiber content
   51.6g Chocolate + 17.2g Wheat Dextrin
   Did not solidify. Very Gritty
10% Fiber content
   55.7g Chocolate + 5.57 Wheat Dextrin + 5.5g Water
   Fat seemed to separate out.
8% Fiber content
   52.5g Chocolate + 4.2g Wheat Dextrin + 3g Water
   Very greasy.
4% Fiber Content
   54.7g Chocolate + 2.9g Wheat Dextrin
   Little gritty
6% Fiber Content
   52.5g Chocolate + 3.15g Wheat Dextrin + 2g Water

Trial 2-Add as Wheat Dextrin without the water
6% Fiber Content
   53.3g Chocolate + 3.2g Wheat Dextrin

Observations: The chocolate is very accepting of the fiber alone. It doesn't change the color or texture. It is not very gritty (although there is a small amount of grittiness) but it seems to work better without the water.
8% Fiber Content
   55.5g Chocolate + 4.44g Wheat Dextrin
10% Fiber Content
   58.1 g Chocolate + 5.8g Wheat Dextrin

Observations: Very smooth, not noticeable grittiness, very good. It is solid at room temperature.
15% Fiber Content
   51 g Chocolate + 9g Wheat Dextrin

Observations: More noticeable grittiness; solid at room temperature

Conclusion: Water "irritates" the fat in the chocolate and makes it separate. The best option seems to be to adding fiber to almond bark without water. The ideal content would be between 10% and 15% fiber.

### Experiment 45

High Fat/ High Fiber
Objective: Solid chocolate with high fiber.
30g Cocoa Butter (22%)
15g Cocoa Powder
20g Fiber-Wheat Dextrin (15%)
20g Skim Milk
2g non-fat dry milk
35g Corn Syrup
35g Sugar
5g Corn Starch
2g Emulsifier
Total=149 g

The Cocoa butter was melted, then the Corn Syrup was added. The Cocoa Powder and Sugar were added and dissolved. The non-fat dry milk, corn starch, fiber and milk were combined and heated.

Observations: Pleasing texture. Although appearing greasy, sample does not feel greasy to the touch. Hardened when it cooled

### Experiment 46

### Almond Bark w/ Fiber

Objective: To find the limit of fiber that Almond Bark will accept (an extension of Experiment 44).
10% Fiber Content
   53.2g Almond Bark + 5.3g Fiber (wheat dextrin)
15% Fiber Content
   46.8g Almond Bark + 7.02g Fiber (wheat dextrin)
20% Fiber Content
   50.9g Almond Bark + 10g Fiber (wheat dextrin)
20% Fiber Content with Milk
   57.5g Almond Bark + 11.5g Fiber + 5.6g Milk

Observations: 20% Fiber is too much to mix with Almond Bark alone. Must add milk to allow for the acceptance and dissolving of the wheat dextrin.

Conclusions: All mixed well, but the higher the percentage of fiber, the poorer the taste and the greater the grittiness.

### Experiment 47

Trial 1
   50g Sugar
   40g Cocoa Butter
   30g Cocoa Powder
   15g non-fat dry milk (crushed and hydrated with 5 tsp Water)
   10g Soy Lecithin
   5g Sodium Stearoyl Lactylate
   7 drops Chocolate Flavor
   5 drops Imitation Vanilla
   20g Wheat Dextrin

The Cocoa Butter was melted and the Sugar was added and stirred until it dissolved. The non-fat dry milk mixture was then added with half of the Cocoa Powder and the Emulsifier. Then, the other half of the Cocoa Powder was added.

Observations: Looked promising until adding Soy Lecithin. Maybe amount was too great.

Trial 2--Without Soy Lecithin
50g Sugar
40g Cocoa Butter
20g Cocoa Powder
15g non-fat dry milk (crushed and hydrated with 5 tsp Water)

Mixed separately:
3g Sodium Stearoyl Lactylate
2g Xanthan Gum

Observations: Looks promising.

### Experiment 48

**"Chocolate 1" Variation**

| Previous Recipe | Revised Recipe |
|---|---|
| 10g Water | 10g Water |
| 5g Cocoa Butter | 20g Cocoa Butter |
| 55g Corn Syrup | 40g Corn Syrup |
| 25g Splenda/Sugar | 30g Sugar |
| 10g Soy Protein | 10g Soy Protein |
| 7g Corn Starch | 7g Corn Starch |
| 2g Soy Lecithin (emulsifier) | 2g Soy Lecithin (emulsifier) |
| 10g Chocolate Baking Square | 10g Chocolate Baking Square |
| .5g Chocolate Flavor | 15g Wheat Dextrin |
| 2g Imitation Vanilla | |
| 5g Litesse II | |

Using the Revised Recipe, all wet ingredients were mixed with the chocolate and half of the dry ingredients. This mixture was heated to 175°F and the remaining half of the dry ingredients were then added.

### Experiment 49

Almond Bark with Fiber

Trial 1

Mixed plain almond bark bar with fiber to determine how much it holds and how much the almond bark is capable of holding.
25% Fiber Content
   55g Chocolate Almond Bark + 13.75 Fiber (Wheat Dextrin)
35% Fiber Content
   57g Chocolate Almond Bark + 19.95g Fiber (Wheat Dextrin)
   Observations: Becomes highly gritty at 35% Fiber content and crumbles; not solid.

Trial 2
50g Cocoa Butter
20g Fiber (Wheat Dextrin)
1 g Chocolate Flavor
15g Cocoa Powder

Observations: Still very fluid; not as fluid after incorporating 10g additional Fiber.

### Experiment 50

Brix of Almond Bark vs. Fiber Chocolate

Trial 1
Brix of Almond Bark - 72.3% Soluble sugars

Trial 2
10g Cocoa butter
40g Corn Syrup
75g Sugar (Dissolved in 15g water)
10g Soy Protein
7g Corn Starch
2g Emulsifier Blend
10g Chocolate Baking Square
13.1 g Wheat Dextrin

The Sugar liquid (including Cocoa Butter, Corn Syrup, and Water/Sugar mixture) was heated on a hotplate. The dry ingredients were added after the Sugar liquid came to a boil.

Observations: very sticky; less fat-more fiber formulation likely a better alternative. Hardens after 24 hours.

Brix of Experiment 50-Trial 2 Chocolate - 71.4% soluble sugars

### Experiment 51

Variation
10g Skim Milk
10g Cocoa Butter
40g Corn Syrup
40g Sugar
10g Soy Protein
7g Corn Starch
2g Emulsifier Blend (mono- and di-glycerides)
10g Chocolate Bakers Square
0.5g Chocolate Flavor
2g Vanilla extract
13.1 g Wheat Dextrin

The Chocolate, Cocoa Butter, Milk, Corn Syrup, Sugar, were mixed (in a pan) and heated. The Soy Protein, Corn Starch, Emulsifier and Wheat Dextrin were mixed in a dry bowl. All dry ingredients were added by the spoonful and mixed in.

The pan was removed pan from the heat and the Chocolate Flavor and Vanilla were added. The mixture was spread thinly on a baking sheet and cooled to room temperature.
10% Fiber and Low-Fat.
A_{w} = 0.496

Observations: Sample has a pleasing appearance and a smooth texture. Still very pliable.

### Experiment 52:

### Variation

Trial 1
   10g Cocoa Butter
   40g Corn Syrup
   75g Sugar (dissolved in 15g water)
   10g Soy Protein
   7g Corn Starch
   3g Emulsifier Blend
   10g Baking Square or Cocoa Powder
   14g Wheat Dextrin
   3g Vanilla
   5g Chocolate Flavor
   3g Calorie Free Sweetener

Mix Vanilla, Chocolate Flavor, and Calorie Free Sweetener. Then, mix Cocoa Butter, Corn Syrup, and Sugar/Water mixture in pan and heat to boiling. After that, mix all dry ingredients together and add to boiling mixture little by little. After stirring in all the dry ingredients, let cool and add the flavor mixture.

Observations: acceptable flavor
Trial 2

Adjusted Recipe of Trial 1: only 10g of Water with Sugar and less of flavor mixture
10g Cocoa Butter
40g Corn Syrup
75g Sugar (dissolved in 10g water)
10g Soy Protein
7g Corn Starch
3g Emulsifier Blend
10g Cocoa Powder
14g Wheat Dextrin
2g Vanilla
5g Chocolate Flavor
2g Sucralose-based Calorie Free Sweetener

The Vanilla, Chocolate Flavor and Calorie Free Sweetener were mixed. Next, the Cocoa Butter, Corn Syrup, and Sugar/Water mixture were blended in a pan and heated to boiling (fully boils at 220°F). The boil was held for 2 minutes with constant stirring (mixture became foamy). After heating, all dry ingredients were mixed together and added to the boiling mixture little by little. After stirring in all the dry ingredients, the mixture was allowed to cool and the flavor mixture was added.

Observations: Only 7% Fiber.
Trial 3
   Adjusted Recipe of Trial 1, 2

Objective: Adding more fiber to a formulated chocolate.
10g Cocoa Butter
40g Corn Syrup
75g Sugar (dissolved in 10g water)
8g Soy Protein
7g Corn Starch
3g Emulsifier Blend
10g Cocoa Powder
30g Wheat Dextrin
2g Vanilla
5g Chocolate Flavor
2g Calorie Free Sweetener

Same preparation method as Trial 2: The Vanilla, Chocolate Flavor and Calorie Free Sweetener were mixed. Next, the Cocoa Butter, Corn Syrup, and Sugar/Water mixture were blended in a pan and heated to boiling (fully boils at 220°F). The boil was held for 2 minutes with constant stirring (mixture became foamy). After heating, all dry ingredients were mixed together and added to the boiling mixture little by little. After stirring in all the dry ingredients, the mixture was allowed to cool and the flavor mixture was added.

### Consumer Studies

For all consumer studies, each sample began by first melting the base chocolate (i.e. almond bark, milk chocolate bar, milk chocolate baking chips)-even for the control samples. The fiber was incorporated by stirring and heating through at a medium heat for the same time for each treatment to decrease variability between treatments. The chocolate was poured into shallow metal pans and allowed to cool and solidify for 24 hours. Consumers were presented 1" x 1" squares of the chocolate for testing. The fiber used in these studies was soluble wheat dextrin (BENEFIBER® brand) with no added calcium. Various other types of fibers were tried, but the results were not acceptable.

A consumer study was done on January 30, 2009, to determine the functionality of the chocolate. There were 93 participants in the study with a variety of ages and education levels. The study took place at Kansas State University. The study retrieved information pertinent to the marketing of a fiber-fortified chocolate (such as age, gender, and whether the participants in the study would consider buying a low fat or fiber-fortified chocolate)

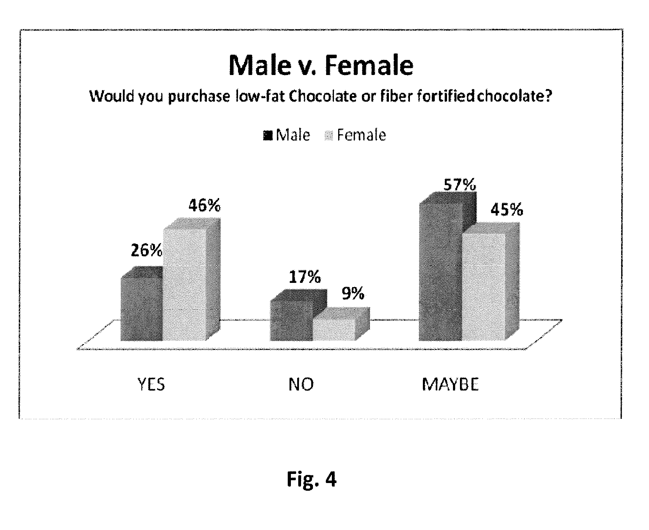

Figure 4 presents the results of a "Willingness to Purchase" survey involving both male and female participants concerning low-fat chocolate and fiber-fortified chocolate.

Overall, female participants were more confident about their willingness to purchase a fiber-fortified chocolate, while males were less sure about the purchase. Overall, females aged 18-25 showed the greatest willingness to purchase a fiber-fortified chocolate.

### Demographics of Study

The participants in this study included 43 males and 54 females. The mean age was 31.75 years.

An additional part of this study evaluated actual samples using almond bark as the base to minimize the variability seen when using different types of chocolate. The objective was to determine whether a low-fat, fiber-fortified chocolate would be acceptable to consumers. The overall score received for this sample was 5.2 (on a 9-point scale), which would not typically be an acceptable score for a product in development. However, additional testing showed that acceptability of the low-fat product increased when it was used as an ingredient in layered confectionery products.

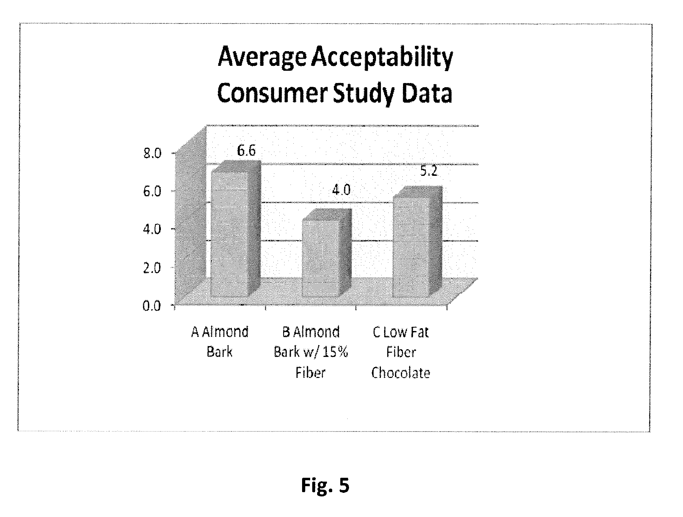

Figure 5 shows the results of the above-described consumer study for almond bark, almond bark with 15% DV fiber (based on a 40g serving size) and a low-ft, fiber-fortified chocolate.

### Additional Consumer Studies

### Experiment 1

The following treatments were evaluated for consumer acceptability using Hershey's milk chocolate bars:
-- Control (No Fiber)
-- 5% Daily Value (DV) Fiber
-- 10% DV Fiber
-- 10% DV Fiber with Rice Crisps
-- 15% DV Fiber

Results are based on evaluations of 100 consumers.

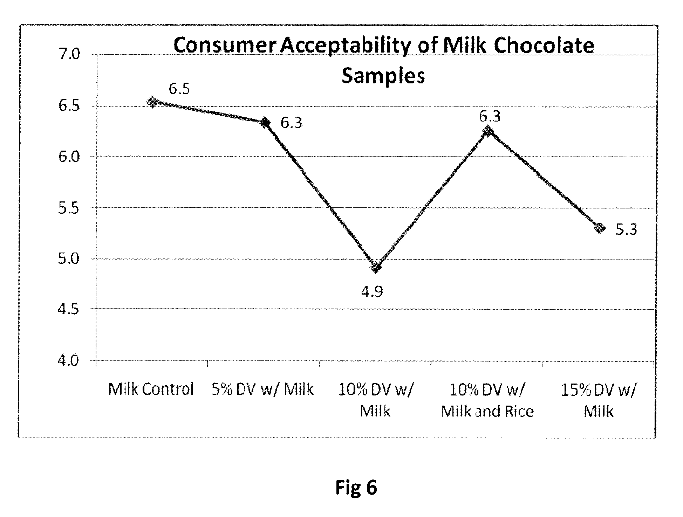

Figure 6 is a graph of consumer acceptability of milk chocolate samples having various levels of fiber.

As shown in the graph of Figure 6, the milk chocolate bar (control) sample received the overall highest rating for consumer acceptability on a 9-point scale. The 10% DV sample received the lowest rating for acceptability. This low score was attributed to "grittiness" that was assumed to be caused by the fiber content of the sample. In order to determine if unacceptable mouthfeel was the main contributor to lack of success, rice crisps were added to the 10% DV Fiber sample to determine if the crunch and crispness added would detract from the grittiness. As can be seen by the graph, the acceptability went from 4.9 to 6.3 with the addition of the rice crisps. It is of interest to note that the 15% DV Fiber sample did receive "higher" scores than the 10% sample (without rice), but it is not considered to be statistically significant. Additionally, the differences between the milk chocolate control and the sample with 5% DV fiber would not be considered statistically significant. This gives the notion that the addition of 5% fiber to a milk chocolate product may not have detrimental effects to consumer acceptability. The overall conclusion from Experiment 1 is that the addition of textural ingredients (such as rice crisps) could improve consumer acceptability of fiber-fortified chocolate products. Examples of other textural ingredients that might be used include, but are not limited to, coconut, marzipan, nougat, peanuts, hazelnuts and almonds.

### Experiment 2

### Milk Chocolate Baking Chips (Hershey's)

10% Daily Value (DV) for Fiber
15% DV Fiber

The milk chocolate baking chips contained sugar, chocolate, non-fat milk, cocoa butter, milk fat, soy lecithin, vanillin and artificial flavor.

Results are based on evaluations of 125 consumers. It is tempting to compare the milk chocolate control to the baking chip control, but these samples were not evaluated side by side. However, the point of interest for Experiment 2 is the score for the 10% DV Fiber treatment made with baking chips. The acceptability score is 6.7 (on a 9-point scale), as compared to 4.9 for the 10% DV with milk chocolate sample. This result can possibly be attributed to ingredient differences between the base chocolates. As a milk chocolate candy bar is meant to be eaten alone, it has higher levels of milk and emulsifiers to give it an acceptable mouthfeel. Baking chips, however, are formulated to be incorporated into other products, perhaps explaining the significantly higher levels of acceptability seen in Experiment 2. This leads to the conclusion that while baking chips are not commonly consumed alone, they have potential for the addition of ingredients, including soluble fibers. This may allow confectionery products to be fortified to deliver the health benefits of fiber, an often lacking but essential part of the human diet.

**Table 1 Consumer Acceptablitiy of Baking Chip Samples**

| SAMPLE | ACCEPTANCE SCORE |
|---|---|
| Baking chip control | 6.1 |
| Baking chip with 10% DV fiber | 6.7 |
| Baking chip with 15% DV fiber | 5.0 |

### Summary of Results

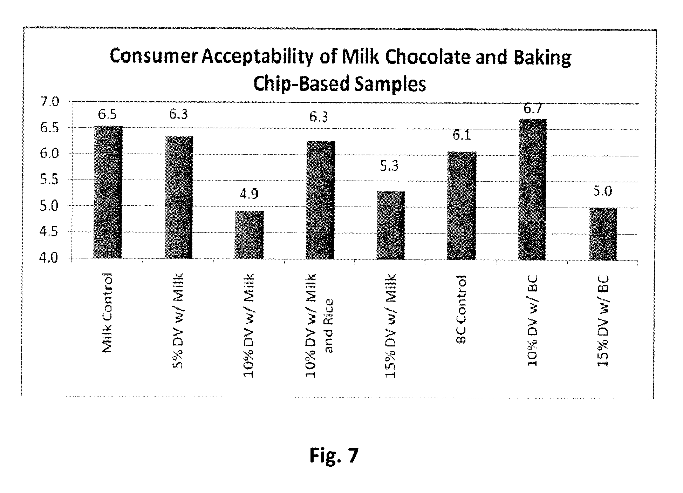

Figure 7 shows consumer acceptability scores for both milk chocolate and baking chip-based samples having various levels of fiber (as %DV for a 40g serving). All samples were melted, solidified and cut into 1-inch squares for presentation to the test participants.

The Daily Value of dietary fiber is 25g for a 2000-calorie diet and 30g for a 2500-calorie diet. Percent DV is based on a 40g serving.

It is apparent from the experimental results and consumer acceptance studies reported above, that dietary fiber in the form of wheat dextrin may be added to chocolate (or milk chocolate) in quantities up to about 9% by weight without adversely affecting the organoleptic properties of the chocolate. Surprisingly, it has been found that chocolate baking chips containing about 6% (w/w) wheat dextrin fiber are actually preferred by consumers over chocolate baking chip having no added fiber. Thus, the practice of the present invention provides a lower fat chocolate having a significant quantity of dietary fiber.

Multi-layer confection with chocolate barrier layer

It has been found that a multi-layer confection comprising components of differing water activity can be stabilized (inter-layer water migration substantially prevented) by providing a chocolate barrier layer between the different components.

Although many different substrates are used in the creation of today's multi-layer candy bars, with two, known exceptions, none of today's candy bars has a layer of chocolate inside the bar dividing one or more different substrates. The two exceptions are the Kit Kat® bar (see e.g. U.S. Patent No. 4,963,379) and the Nestle Wafer Bar® (see, e.g., U.S. Patent No. 4,889,729), both of which consist of wafers separated by extremely thin layers (<= 1 mm in practical application) of chocolate, with the whole bar enrobed in a chocolate coating.

As detailed in U.S. Patent Nos. 4,963,379 and 4,889,729, both the Kit Kat® bar and the Nestle Wafer Bar® rely on an extremely thin layer of melted chocolate that is coated on one surface of a wafer as an adhesion layer to adhere a second wafer for its construction whereas the process of the present invention employs a reasonably sized, reduced fat chocolate moisture barrier layer to separate one or more different substrates.

By inserting a solid layer of chocolate (meaning a solid layer of reduced fat or fiber-fortified chocolate as disclosed herein) between substrates, different combinations of tastes and mouth feels can be created via the use of different substrate layers in the bar. By expanding the size of the bar in the vertical or "z" direction (versus today's horizontal or "x-y" plane expansion), confections according to the present invention can have unique sizes and shapes not available on the market today.

An edible confection according to one embodiment of the invention may comprise at least one chocolate layer comprised of: about 8% by weight vegetable fat; about 74% by weight corn syrup having a dextrose equivalent (DE) value of 42; about 4% by weight soy protein; about 8% by weight corn starch; about 7% by weight cocoa powder; and, about 0.4% by weight of a mixture of mono- and di-glycerides. Such a formulation has been found to exhibit superior taste and acceptable water activity despite having a relatively low fat content. A second embodiment also found to exhibit superior taste and acceptable water activity employs a fiber-fortified chocolate barrier layer comprised of sugar, chocolate, non-fat milk, cocoa butter, wheat dextrin, soy lecithin, vanillin and artificial flavor.

An exemplary (but non-limiting) list of suitable substrate layers includes: Wafers; Peanut Butter; Granola; Marshmallow; Peppermint; Cereal; Fudge; Puffed Rice; Fruit; Coconut; Malt; Nuts; Toffee; Nougat; Cookie; Caramel; Dough; Nut Meal; Cake; Potato Chip; Pretzel; Cracker; and, Cream Filling.

The details on the composition of the chocolate layer(s) according to the present invention in multi-layer candy bars utilizing reduced fat chocolate layers as reasonably sized moisture barriers internal to the confectionery are disclosed in the following table. All ingredients (with the exception of the corn syrup and vegetable fat) were first blended at low speed in a mechanical mixer at room temperature. The vegetable fat was then folded in. Finally, the corn syrup (heated to about 95°C.) was added and the mixing continued until the resulting product was visually homogeneous and smooth. The mixture was then poured into one or more metal molds and allowed to cool and harden prior to evaluation.

**Table 2 -- Composition of Samples by Sample Number**

| **Sample number** | **Total** | **Vegetable Fat** | | **42 DE Corn syrup** | | **Soy Protein** | | **Corn Starch** | | **Mono-and di-glycerides** | | **Cocoa Powder** | |
|---|---|---|---|---|---|---|---|---|---|---|---|---|---|
| | in g | in g | in % | in g | in % | in g | in % | in g | in % | in g | in % | in g | in % |
| 1 | 120 | 30 | 25% | 60 | 50% | 15 | 13% | 10 | 8% | 0.5 | 0% | 4.5 | 4% |
| 2 | 120 | 25 | 21% | 60 | 50% | 15 | 13% | 10 | 8% | 0.5 | 0% | 9.5 | 8% |
| 3 | 125 | 20 | 16% | 75 | 60% | 10 | 8% | 10 | 8% | 0.5 | 0% | 9.5 | 8% |
| 4 | 127.5 | 15 | 12% | 82.5 | 65% | 10 | 8% | 10 | 8% | 0.5 | 0% | 9.5 | 7% |
| 5 | 132.5 | 10 | 8% | 97.5 | 74% | 10 | 8% | 5 | 4% | 0.5 | 0% | 9.5 | 7% |
| 6 | 135 | 10 | 7% | 105 | 78% | 10 | 7% | 5 | 4% | 0.5 | 0% | 4.5 | 3% |
| 7 | 135 | 10 | 7% | 105 | 78% | 5 | 4% | 5 | 4% | 0.5 | 0% | 9.5 | 7% |
| 8 | 137.5 | 10 | 7% | 112.5 | 82% | 5 | 4% | 5 | 4% | 0.5 | 0% | 4.5 | 3% |
| 9 | 135 | 10 | 7% | 105 | 78% | 5 | 4% | 10 | 7% | 0.5 | 0% | 4.5 | 3% |
| 10 | 132.5 | 10 | 8% | 97.5 | 74% | 5 | 4% | 10 | 8% | 0.5 | 0% | 9.5 | 7% |

**Table 3 -- Measured Characteristics by Sample Number:**

| **Sample number** | **% Brix** | **pH** | **Moisture content** | **Water activity** |
|---|---|---|---|---|
| | | | | |
| 1 | 81.4 | 5.75 | | 0.636 |
| 2 | 77.0 | 5.62 | | 0.658 |
| 3 | 76.9 | 5.24 | | 0.652 |
| 4 | 75.3 | 5.33 | | 0.663 |
| 5 | 86.6 | 4.70 | | 0.66 |
| 6 | 81.6 | 4.88 | | 0.729 |
| 7 | 79.5 | 5.12 | | 0.743 |
| 8 | 83.6 | 4.48 | | 0.736 |
| 9 | 83.3 | 4.85 | | 0.703 |
| 10 | 80.8 | 4.88 | 5.42% | 0.693 |

A taste panel comprised of five food scientists evaluated each of the above-listed ten samples for texture (graininess in mouth), in-hand texture, taste and mouth feel. Sample #10 was found to be superior despite its relatively low fat content. This sample had a water activity that did not differ significantly from the other samples, including samples having significantly higher fat content.

A series of experiments was conducted to determine the effectiveness of a barrier layer of chocolate in a multi-layer confection having substrates with differing water activities (Aw). Without such a barrier layer, water will migrate from the substrate(s) having higher water activity to the substrate(s) having lower water activity. For example, the graham cracker layer a confection having both a strawberry jam filling and a graham cracker substrate would be expected to become soggy after a period of time due to the migration of water from the jam to the relatively dry graham cracker.

Two chocolate formulations were used as a barrier layer. The "control chocolate" was a milk chocolate consisting essentially of sugar, chocolate, non-fat milk, cocoa butter, soy lecithin and vanillin. The "10% Fiber Chocolate" was prepared using the same milk chocolate, but with wheat dextrin added in a quantity sufficient to provide 10% of the Daily Value of dietary fiber per 40g serving.

The following table shows the initial moisture (in percent) and measured water activity for each ingredient as well as the maximum moisture of the ingredient (in percent) after two days in a multi-layer confection.

**Table 4 - Moisture content of substrates**

| **INGREDIENT** | **INITIAL MOISTURE** | **MAX FINAL MOISTURE** | **INITIAL A_{w}** |
|---|---|---|---|
| **Strawberry Spread** | **42.0%** | **41.0%** | **0.841** |
| **Dried Cranberries** | **11.0%** | **12.0%** | **0.421** |
| **Graham Crackers** | **4.0%** | **4.0%** | **0.384** |
| **Peanut Butter** | **2.0%** | **3.0%** | **0.267** |
| **Banana Chips** | **4.0%** | **4.4%** | **0.242** |
| **Control Chocolate** | **2.0%** | **2.0%** | **0.348** |
| **10% Fiber Chocolate** | **2.0%** | **2.0%** | **0.354** |

The following table shows the water activity for each ingredient after two days in a multi-layer confection. Two double-layer confections, two triple layer confections and two quadruple layer confections were tested. For each confection, one sample was prepared using the commercial milk chocolate described above as a barrier layer (the "control chocolate") and another sample was prepare using the fiber-fortified chocolate as a barrier layer.

**Table 5 - Water activity of fillings after 2 days**

| **Control Chocolate** | | **10% Fiber Chocolate** | |
|---|---|---|---|
| | **Final A_{w}** | | **Final A_{w}** |
| **Double Layer #1** | | **Double Layer #1** | |
| Graham Cracker | 0.414 | Graham Cracker | 0.424 |
| Strawberry Spread | 0.816 | Strawberry Spread | 0.807 |

| **Double Layer #2** | | **Double Layer #2** | |
|---|---|---|---|
| Peanut Butter | 0.31 | Peanut Butter | 0.315 |
| Banana Chips | 0.282 | Banana Chips | 0.286 |

| **Triple Layer #1** | | **Triple Layer #1** | |
|---|---|---|---|
| Banana | 0.389 | Banana | 0.398 |
| Strawberry | 0.824 | Strawberry | 0.828 |
| Banana | 0.391 | Banana | 0.392 |

| **Triple Layer #2** | | **Triple Layer #2** | |
|---|---|---|---|
| Graham | 0.384 | Graham | 0.39 |
| Peanut Butter | 0.331 | Peanut Butter | 0.339 |
| Cranberry | 0.427 | Cranberry | 0.431 |

| **Quadruple Layer #1** | | **Quadruple Layer #1** | |
|---|---|---|---|
| Graham | 0.384 | Graham | 0.39 |
| Peanut Butter | 0.35 | Peanut Butter | 0.359 |
| Cranberry | 0.471 | Cranberry | 0.479 |
| Strawberry | 0.824 | Strawberry | 0.83 |

| **Quadruple Layer #2** | | **Quadruple Layer #2** | |
|---|---|---|---|
| Banana Chips | 0.381 | Banana Chips | 0.387 |
| Strawberry | 0.822 | Strawberry | 0.82 |
| Cranberry | 0.456 | Cranberry | 0.457 |
| Peanut Butter | 0.33 | Peanut Butter | 0.336 |

The experimental results summarized in the above tables show that a fiber-fortified chocolate according to the present invention has barrier properties that are substantially equivalent to those of conventional chocolate.

A multi-layer confection according to the invention may be produced by the following method: first, the interior of a mold is coated with the chocolate; second, a first substrate layer is inserted in the mold; third, a barrier layer of chocolate is applied over the substrate layer such that the substrate layer is substantially completely covered and the barrier layer bonds to the chocolate coating the interior of the mold; fourth, a second substrate layer is inserted in the mold on top of the barrier layer; fifth, a second layer of chocolate is applied over the second substrate layer such that the second substrate layer is substantially completely covered and the second chocolate layer bonds to the chocolate coating the interior of the mold. As will be appreciated by those skilled in the art, additional substrate layers separated by additional chocolate barrier layers can be inserted to produce a confection having any desired number of substrate layers.

The following are some preferred embodiments of the present invention:

Preferably, the amount of cocoa in the chocolate compositions of the present invention is in the range of 5-40% by weight, preferably 5-30%, preferably 6-20%, preferably 7.5-15%.

Preferably, the amount of cocoa butter in the chocolate compositions of the present invention is in the range of 1-20% by weight, preferably 1-15%, preferably 2-10%.

Preferably, the amount of natural sweetener (sugar and/or corn syrup) in the chocolate compositions of the present invention is in the range of 25-70% by weight, preferably 35-65%, preferably 40-60%, preferably 45-60%.

Preferably, the amount of artificial sweetener in the chocolate compositions of the present invention is in the range of 0.05-20% by weight, preferably 1-15%.

Preferably, the amount of emulsifier in the chocolate compositions of the present invention is in the range of 0.1-5% by weight, preferably 0.2-3%, preferably 0.25-2%, preferably 0.5-1 %.

Preferably, the amount of egg protein in the chocolate compositions of the present invention is in the range of 2-10% by weight, preferably 4-7.5%.

Preferably, the amount of non-fat dry milk in the chocolate compositions of the present invention is in the range of 5-30% by weight, preferably 7.5-20%, preferably 10-15%.

Preferably, the amount of fat in the chocolate compositions of the present invention is in the range of 5-60% by weight, preferably 7.5-50%, preferably 10-30%, preferably 10-20%.

Preferably, the amount of starch (preferably corn starch) in the chocolate compositions of the present invention is in the range of 5-15% by weight, preferably 5-10%.

Preferably, the amount of wheat dextrin in the chocolate compositions of the present invention is in the range of 3.5-8.5% by weight, preferably 4-7%, preferably 5-6.5%, preferably about 6%.

As used herein, "preformed chocolate" is chocolate is which has been made prior to its inclusion in the compositions of the present invention. It includes milk chocolate, dark chocolate and white chocolate each having the relevant definitions given above. Chocolate is preferably a mixture of cocoa, cocoa butter, and sweetener (preferably sugar) and further optional additives which are disclosed herein.

Although the invention has been described in detail with reference to certain preferred embodiments, variations and modifications exist within the scope and spirit of the invention as described and defined in the following claims.

## Claims

1. A fiber-fortified chocolate comprising:
cocoa butter;
a sweetener;
an emulsifier; and,
between about 3 to about 9 percent by weight wheat dextrin.

2. A fiber-fortified chocolate as recited in claim 1 wherein the sweetener is selected from the group consisting of sugar and corn syrup.

3. A fiber-fortified chocolate as recited in claim 1 wherein the sweetener is an artificial sweetener selected from the group consisting of sucralose and polydextrose.

4. A fiber-fortified chocolate as recited in any preceding claim wherein the emulsifier is selected from the group consisting of soy lecithin, carrageenan, mono- and/or di-glycerides, xanthan gum, polyglycerol polyricinoleate (PGPR) and Di-Acetyl Tartaric (acid) Ester of Monoglyceride (DATEM).

5. A fiber-fortified chocolate as recited in any preceding claim further comprising soy protein.

6. A fiber-fortified chocolate as recited in any preceding claim further comprising egg protein.

7. A fiber-fortified chocolate as recited in any preceding claim further comprising corn starch.

8. A fiber-fortified chocolate as recited in any preceding claim further comprising non-fat dry milk.

9. A fiber-fortified chocolate as recited in any preceding claim further comprising preformed chocolate and/or cocoa.

10. A fiber-fortified chocolate consisting essentially of:
cocoa butter;
a sweetener;
an emulsifier; and,
between about 3 to about 9 percent by weight wheat dextrin.

11. A fiber-fortified chocolate as recited in claim 10 wherein the sweetener is sugar.

12. A fiber-fortified chocolate as recited in claim 10 wherein the sweetener is an artificial sweetener selected from the group consisting of sucralose, polydextrose and sugar alcohols.

13. A fiber-fortified chocolate as recited in any of claims 10 to 12 wherein the emulsifier is selected from the group consisting of soy lecithin, carrageenan, mono- and/or di-glycerides, xanthan gum, polyglycerol polyricinoleate (PGPR) and the Di-Acetyl Tartaric (acid) Ester of Monoglyceride (DATEM).

14. A fiber-fortified chocolate as recited in any of claims 10 to 13, further comprising preformed chocolate and/or cocoa.

15. A food product comprising:
a first substrate having a first water activity;
a second substrate having a second water activity greater than the first water activity; and,
a layer of chocolate separating the first substrate from the second substrate, the layer having a thickness sufficient to substantially prevent the migration of water from the second substrate to the first substrate.

16. A food product as recited in claim 15 wherein the chocolate layer consists essentially of chocolate, cocoa, cocoa butter, a sweetener, an emulsifier and between about 3 to about 9 percent by weight wheat dextrin.

17. A method for making a multi-layer confection comprising:
coating the interior of a mold having an interior cavity with chocolate;
placing a first substrate having a first water activity in the mold;
covering the first substrate with a first layer of chocolate having sufficient thickness to substantially prevent the migration of water through the layer;
sealing the perimeter of the layer of chocolate to the chocolate coating the interior of the mold;
placing a second substrate having a second water activity different from the first water activity into the mold;
covering the second substrate with a second layer of chocolate; and
sealing the perimeter of the second layer of chocolate to the chocolate coating the interior of the mold.

18. A method as recited in claim 17 wherein sealing the perimeter of the layer of chocolate comprises adding melted chocolate to the mold such that the melted chocolate contacts the chocolate coating the interior of the mold.

19. A method as recited in claim 17 wherein the first layer of chocolate comprises wheat dextrin.

20. A method as recited in claim 19 wherein the wheat dextrin comprises between about 3 to about 9 percent by weight of the chocolate.

21. A method as recited in claim 17 wherein the first layer of chocolate consists essentially of chocolate, cocoa, cocoa butter, a sweetener, an emulsifier and between about 3 to about 9 percent by weight wheat dextrin.
